# EUROPEAN PATENT APPLICATION

(11) **EP 4 799 952 A1**
(43) Date of publication of application: **02.09.2026**
(21) Application number: 25161049.9
(22) Date of filing: 28.02.2025
(51) Int. Cl.: B65G 1/04

(54) **AN AUTOMATED STORAGE AND RETRIEVAL SYSTEM**

(71) Applicant: AutoStore Technology AS, 5578 Nedre Vats (NO)
(72) Inventor: Myrmo, Øystein, Nedre Vats (NO); Kirkeby, Ole-Martin, Nedre Vats (NO)
(74) Representative: Kilburn & Strode LLP

(57) **Abstract**

An automated storage and retrieval system (510) comprises a plurality of containers (112) arranged in stacks, the containers for the storage of goods. The system also comprises a network (520) of tracks (610) extending above the stacks. In addition, the system comprises a plurality of robotic container handling vehicles (630) arranged to travel on the tracks, between locations above the stacks. The plurality of vehicles are arranged to cooperatively engage an uppermost container of one of the stacks to collectively lift that container for moving to another location.

## Description

### TECHNICAL FIELD

The disclosure relates to an automated storage and retrieval system, a network of tracks, a robotic container-handling vehicle and a method of operating such a system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. The grid is in the form of a frame made up of a plurality of rectilinear frame members extending vertically, that is in the Z direction, and distributed horizontally, that is in the X and Y directions, to form vertical columns between the vertical frame members. The vertical columns accommodate the stacks of containers. The frame members may be formed of extruded aluminium. A rail system is arranged on top of the grid, on which the container-handling vehicles configured to lift containers from the grid can travel. The container-handling vehicles are configured to transport containers from the grid and to deliver them to ports or stations at the periphery of the grid so that the goods within the container can be picked and packed.

This existing automated storage and retrieval systems works well. An improvement to this system would be to reduce the cost of at least some elements of the system while keeping the benefits provided by the system. Another improvement would be to modify the system in a way that maximises the amount of space that can be filled with containers in a warehouse containing the system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of an existing storage system comprising a grid and a plurality of robotic container-handling vehicles configured to retrieve and/or rearrange goods stored within the grid;
Fig. 2 shows a top view of the system of Fig. 1;
Fig. 3A shows a side view of an existing first robotic container-handling vehicle suitable for use in the system of Fig. 1;
Fig. 3B shows a side view of an existing second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a front perspective view of a modified automated storage and retrieval system that is a development of the system of Fig. 1 and that embodies the invention;
Fig. 6 shows a top perspective view of the modifies system of Fig. 5;
Fig. 7 shows a first detailed perspective view of part of the modified system of Fig. 5;
Fig. 8 shows a second detailed perspective view of another part of the modified system of Fig. 5;
Fig. 9 shows a perspective view of a first phase of operation of the modified system of Fig. 5;
Fig. 10 shows a perspective view of a second phase of operation of the modified system of Fig. 5; and
Fig. 11 shows a perspective view of a third phase of operation of the modified system of Fig. 5.

### DETAILED DESCRIPTION

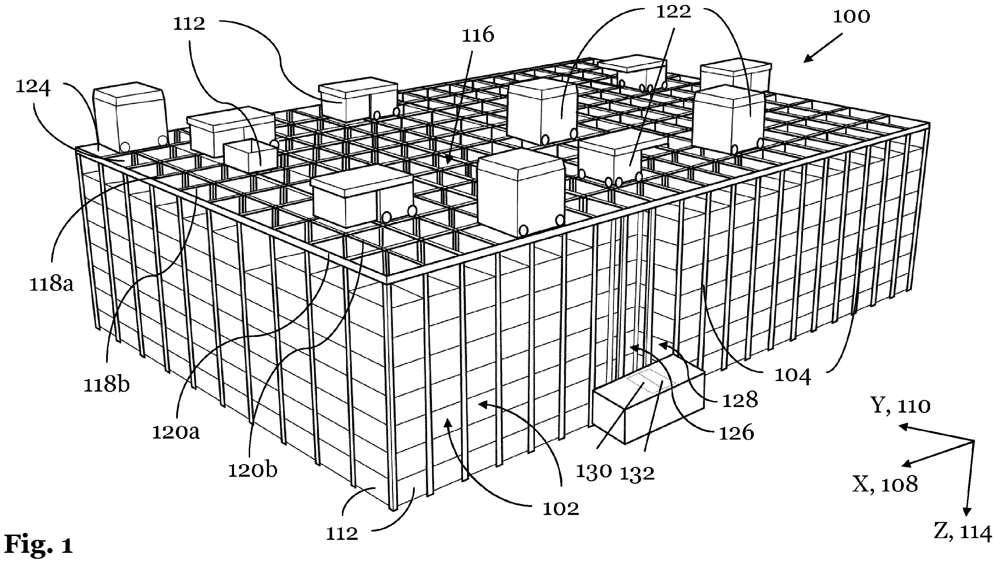

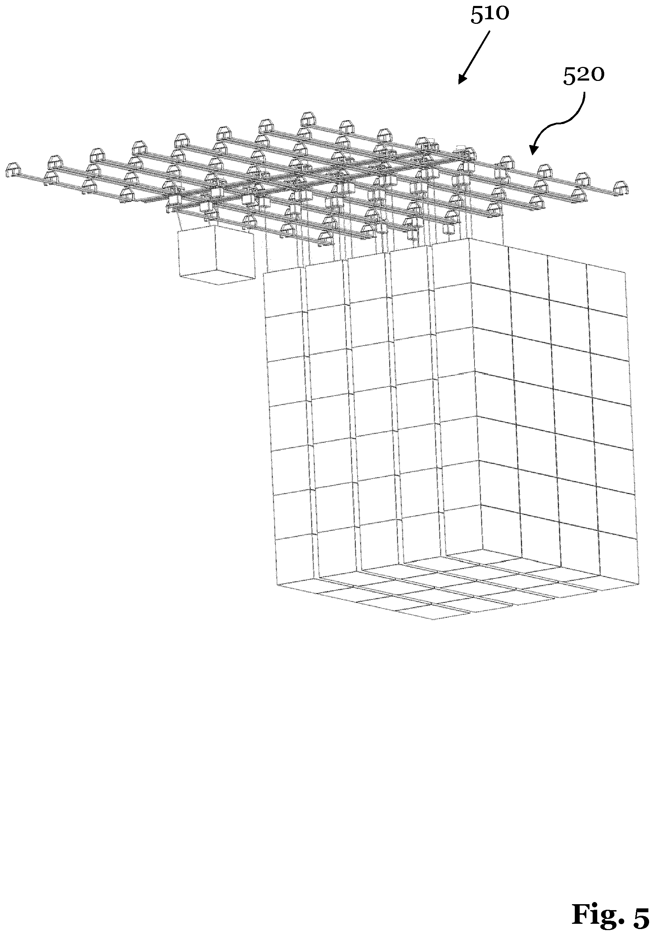

In overview, the disclosure relates to an automated storage and retrieval system. An existing system will first be described with reference to Fig. 1 to Fig. 4 so that key components of the system and its operation can be understood. A modified automated storage and retrieval system will then be described with reference to Fig. 5 to Fig. 11 that uses many of the components of the existing system and operates in a similar way, but that also is an improvement of that system and so differs from it in some respects. In overview, the modified system avoids having the extensive three-dimensional grid structure that extends between, around and above stacks of containers. Instead of that, the modified system has a simple network of tracks suspended above the stacks of containers, for example from the ceiling of a warehouse in which the system is housed. This reduces the complexity of the system, and the amount of material and time needed to construct it, and so saves significant cost. The modified system also replaces each large, sophisticated, robotic container-handling vehicle of the existing system with a plurality of smaller, simpler, robotic container-handling vehicles. These smaller robots require less space between the stacks and the warehouse ceiling, allowing more of the warehouse to be used for stacking containers. The simpler robots are also less expensive. Another feature is that the modified system allows flexibility to change the dimensions of the bins. This can be accommodated simply by spacing the tracks of the modified system differently. By contrast, in the existing system, this would require the whole grid to be rebuilt and all the robots to be replaced by robots with wheels spaced to accommodate the new grid spacing. Other aspects of the existing system are carried over to the modified system.

### Automated storage and retrieval system overview

Referring to the arrangement shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

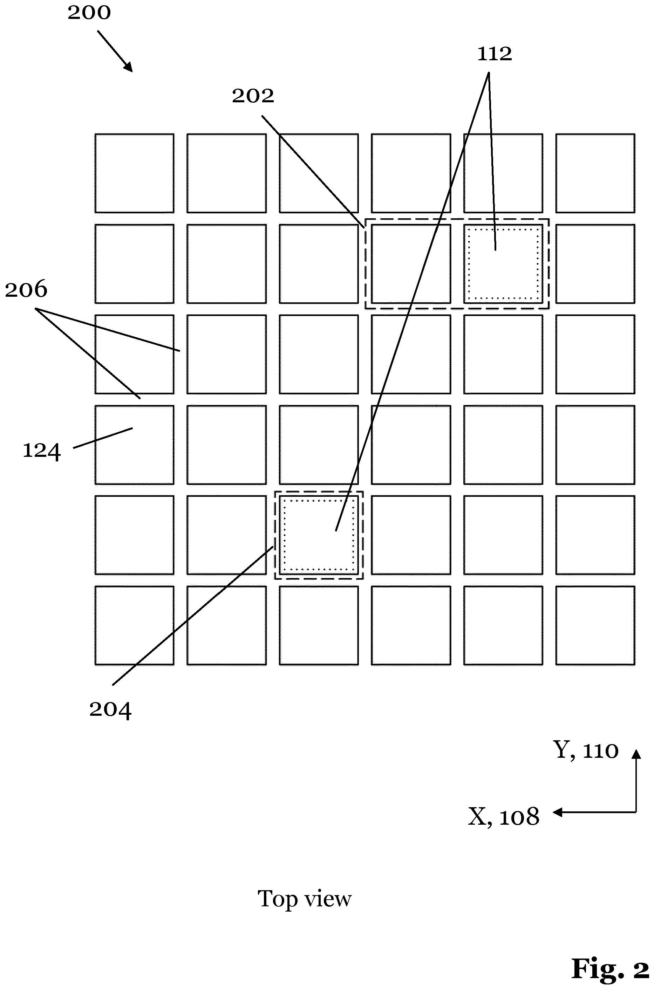

Referring to the arrangement shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

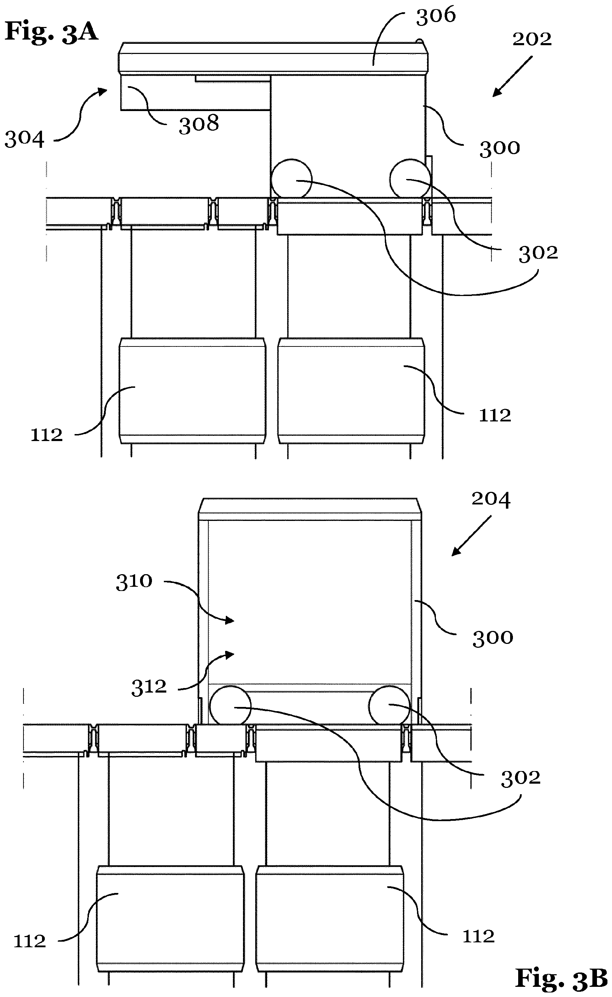

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

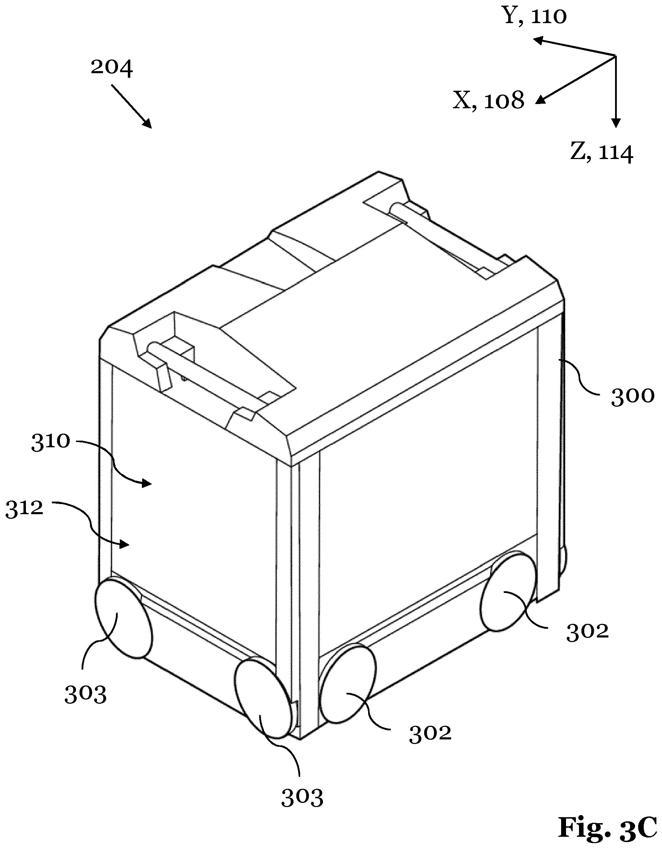

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

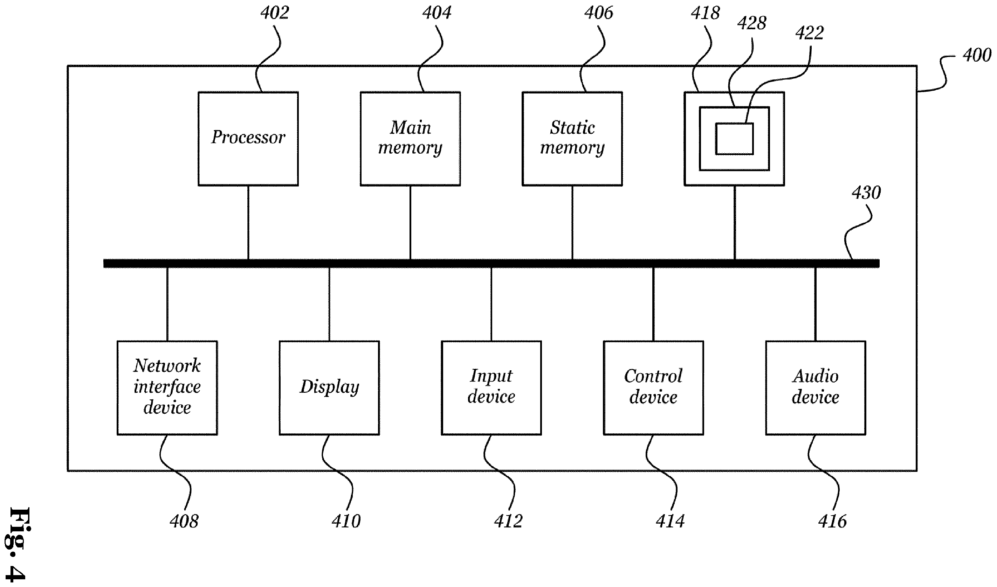

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

Fig. 5 shows a modified automated storage and retrieval system 510. As mentioned above, this modified system 510 uses many of the components of the existing system and operates in a similar way, but it is also an improvement of that system and so differs from it in some respects. Those improvements will now be described. Unless explicitly stated in the following description, the modified system 510 is structured and operates in the same way as the existing system described above with reference to Fig. 1 to Fig. 4. The foregoing description is therefore important in understanding what follows.

The modified system 510 lacks the grid 100 described above with reference to Fig. 1. It therefore also lacks the frame members 104 of that grid 100 extending in the X and Y directions. The modified system does include the storage containers or bins 112 that are stacked on top of each other. These are stacked in a self-supporting manner, in the Z direction. Stacks of bins 112 are arranged in the X and Y directions to form an approximation of a cube of bins 112.

### Network of tracks

Instead of a grid, the modified system 510 has a network 520 of tracks. This network 520 of tracks is suspended from a ceiling of a warehouse (not shown) in which the modified system 510 is housed. In this embodiment, the network 520 of tracks is suspended from a ceiling of the warehouse so as to be above the stacks of containers 112. In other embodiments, it is envisaged that the network 510 of tracks may be suspended from walls of the warehouse so as to be positioned above the stacks of containers 112.

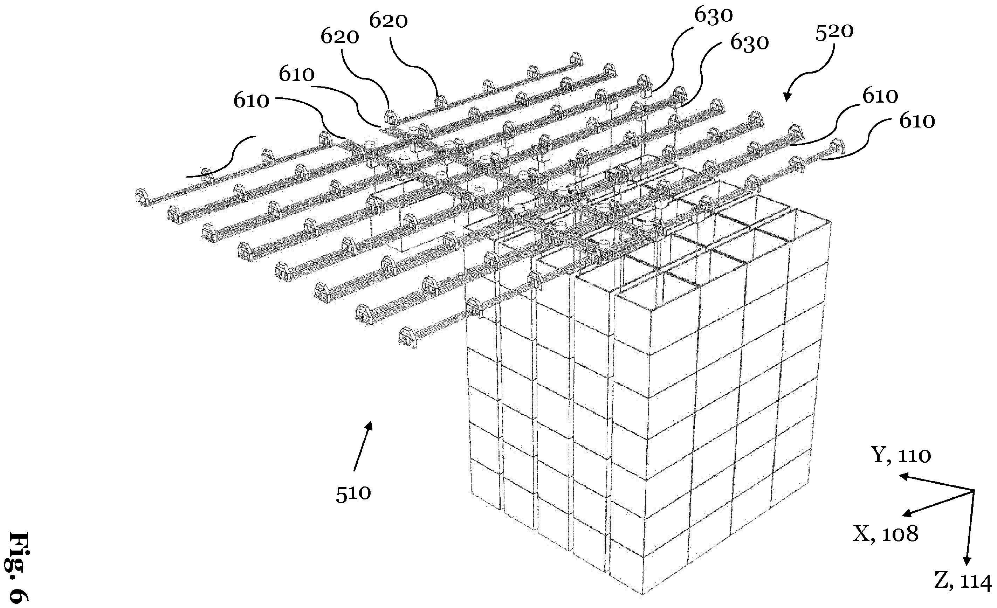

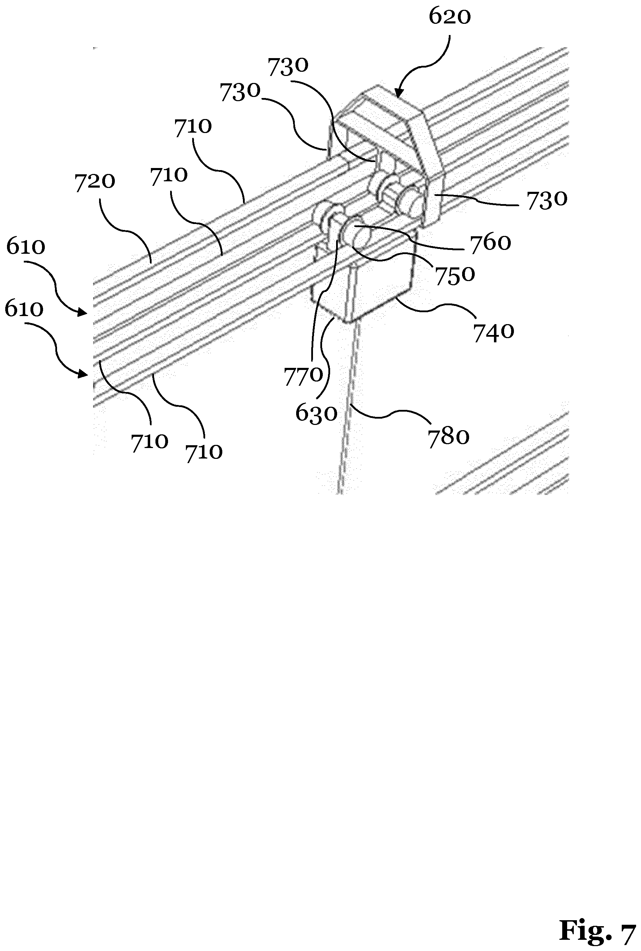

Fig. 6 shows the modified system 510 from above. As can be seen, the network 520 of tracks is made up of tracks 610 that extend in the X direction. With reference to Fig. 7, each track 610 is made up of a pair of parallel, spaced-apart rails 710. With continued reference to Fig. 6, one track 610 is provided to run above each side of each stack of containers 112 in the X direction. Thus, there are two tracks 610, spaced apart and next to each other, running between adjacent stacks of containers 112; and a single track 610 running above the outermost side of the stacks of containers 112 that are outermost in the cube.

As can be seen in Fig. 6, some tracks 610 are also provided that run in the Y direction. Specifically, tracks 610 in the Y direction are provided on each side of at least one row of stacks of containers 112. In this embodiment, that row of stacked containers is approximately midway along the cube of containers 112 in the X direction. Although more tracks 610 may be provided that extend in the Y direction (Fig. 6 actually shows two tracks 610 on each side of the row of stacks), as will be seen, this is not necessary for the system 510 to operate.

With reference to Fig. 7, and as mentioned, each track is made up of a pair of parallel, spaced-apart rails 710. The rails 710 provide a flat, substantially continuous, upper surface 720 that, as will be seen, provide a surface for wheels of modified robots to travel along. It is envisaged that any suitable material may be used for the rails 710. In this embodiment, the rails 710 are extruded aluminium.

As can be seen in Fig. 6, brackets 620 are provided to support the tracks 610 above the stacks of containers 112. Brackets 620 are provided at intervals along all the tracks 610, the intervals being chosen to properly support the tracks 610.

Fig. 7 shows more detail of one of the brackets 620. As can be seen, one bracket 620 supports an adjacent pair of tracks 610 (and hence four rails 710 in total). The bracket 620 has three webs 730 extending vertically. A central one of the webs 730 is arranged between the two tracks 610. Two outer ones of the webs 730 are each arranged outside a respective one of the tracks 610. The central web 730 has two flanges (not visible in Fig. 7) at its lower end, one flange projecting in one direction to extend underneath and support an innermost rail 710 of one of the tracks 610 and the other flange projecting in the opposite direction to extend underneath and support an innermost rail 710 of the other of the tracks 610. Each of the outer webs 730 has a single inwardly projecting flange that extends underneath and supports the outer rail 710 of the track 610 adjacent the respective outer web 730. Thus, all rails 710 of both tracks 610 are supported by the bracket 620. The webs 730 are joined to other structure of the bracket 620 for fixing directly or indirectly to the ceiling of the warehouse. Thus, the network 520 of tracks is suspended from the ceiling above the stacks of containers 112.

### Trucks

The modified system 510 also lacks the robots 202, 204 of the existing system described above with reference to Fig. 1 to Fig. 4. Instead of these, the modified system 510 includes modified robotic container-handling vehicles. These can be seen on Fig. 6 in the form of trucks 630. Each of the trucks 630 is operable to drive along the tracks 610. As will become clear, whereas a single robot 202, 204 was used to lift, move and lower a container 112 in the existing system, four of the trucks 630 are used to lift, move and lower a container 112 in this modified system 510. (In other embodiments it is envisaged that more or fewer trucks 630 may be used.) So that more than one container 112 may be handled by the trucks 630 at the same time, more than four trucks 630 are provided. For example, the example system 510 shown in Fig. 6 has 30 trucks 630.

One of the trucks 630 can be seen in more detail in Fig. 7 and will now be described, it being understood that this description is representative of all the trucks 630 of the modified system 510. With continued reference to Fig. 7, the truck 630 has a body portion 740 and four wheels 750 mounted to the body portion 740. The truck 630 is arranged relative to the track 610 on which it drives with the body portion 740 below the track 610 and the wheels 750 above the track 610. The four wheels 750 are arranged in two co-axial pairs, the pairs being spaced apart along the body portion 740 in the direction of the track 610 and hence the direction of driving. Thus, one wheel 750 of each pair is positioned on one of the rails 710 of the track 610 and the other wheel 750 of each pair is positioned on the other of the rails 710 of the track 610. Each wheel 750 has a generally cylindrical tread portion 760 that rolls on the rail 710 and a flange portion 770 projecting radially outwardly from the tread portion 760 for ensuring alignment between the wheel 750 and the rail 710 on which it runs.

Each of the of the wheels 750 of the truck 630 is operable to be driven, thereby moving the truck 630 along the track 610 on which it is positioned. Although not visible in Fig. 7, the truck 630 includes drive means in the form of a battery, motor and drive train for (not visible) for driving the wheels 750. The drive means is housed in the body portion 740 of the truck 630.

The truck 630 also has a lifting device (only part of which is shown in Fig. 7). The lifting device is similar to that of the existing robots 202, 204, but is modified to grip just one corner of a container 112, rather than all four corners. The lifting device is arranged and operable to unwind and lower a cable 780 of the lifting device and to rewind and raise that cable 780. At the end of the cable 780 remote from the body portion 740 of the truck 630 is a gripping device (not shown) arranged and operable to engage a corner of the container 112 for lifting and to disengage the corner for depositing the container 112. It is envisaged, in this embodiment, that the griping device be the same as that used in the existing system to grip one corner of a container 112.

The truck 630 also includes, communication, processing and control hardware and software such that the truck 630 can be controlled by the existing processing system 400 described above with reference to Fig. 4.

### Track rotating devices

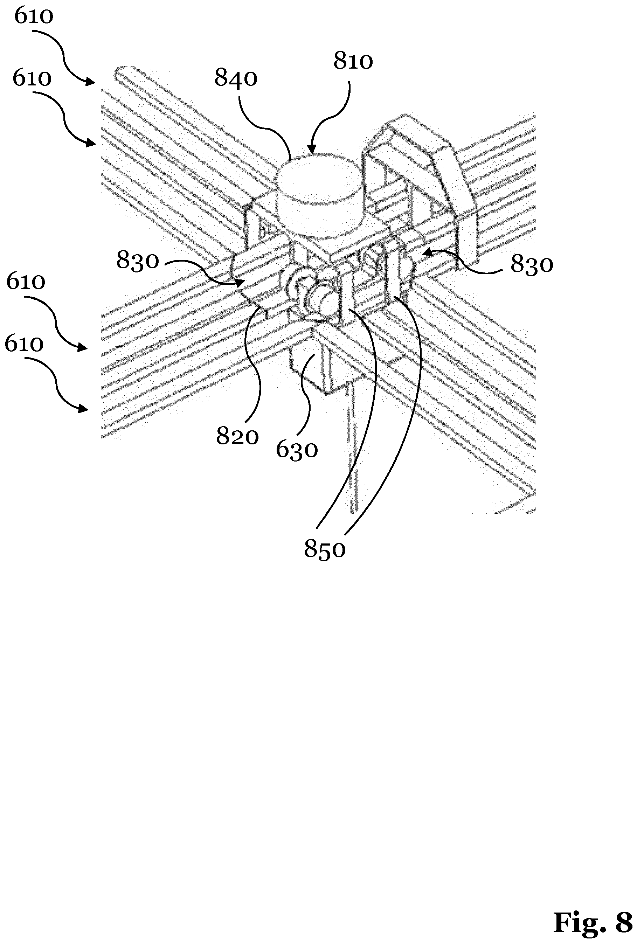

With reference to Fig. 8, the network 520 of tracks also includes track rotating devices 810. The track rotating devices 810 are located where tracks 610 that extend in the X direction meet tracks 610 that extend in the Y direction. Each track rotating device 810 includes a rotatable track portion 820. The rotatable track portion 820 is arranged to receive a truck 630 and rotate the truck 630 between a first position in which it is orientated and aligned for travelling along a track 610 running in one of the X and Y directions and a second position in which the truck 630 is orientated for travelling along a track 610 running in the other of the X and Y directions. The rotatable track portion 820 includes two parallel lengths 830 of rotatable track. The lengths 830 of rotatable track are each of a length to accommodate a truck 630 within that length. In the first position, the two parallel lengths 830 of rotatable track are aligned with track 610 extending in that direction so as to act as a continuation of that track 610. In the second position, the two parallel lengths 830 of rotatable track are aligned with track 610 extending in that second direction so as to act as a continuation of that track 610.

The track rotating device 810 also includes a rotating device 840 for controllably rotating the rotatable track portion 820 between the two positions. The track rotating device also includes a pair of brackets 850 that support the rotatable track portion 820 and connect this to a rotatable part of the rotating device 840, such that rotation of the rotatable part relative to a housing of the rotating device 840 causes the rotatable track portion 820 to rotate. Any suitable device may be used for the rotating device 840. In this embodiment the rotating device 840 is in the form of a stepper motor.

The track rotating devices 810 are operable and controllable by the existing processing system 400 described above with reference to Fig. 4 to move their rotatable track portions 820 between the two positions.

### Operation of the improved system

Operation of the modified automated storage and retrieval system 510 will now be described. The operation that will be described is of one of the containers 112 being raised from the top of a stack in a first location, moved to a second location and then lowered onto another stack. The movement from the first location to the second location will involve moving in the Y direction and the X direction. This will therefore include operation of the track rotating devices 810. It will be understood that the operation that will be described is under the control of the existing processing system 400 described above with reference to Fig. 4.

With reference to Fig. 6, four of the trucks 630 are moved in the X direction along tracks 610 so that each of the trucks 630 is positioned above a respective corner of a container 112 that is to be moved. The container 112 is the uppermost container in a stack of containers 112. Each truck 630 is then operated such that its lifting device unwinds and lowers its cable 780. This continues until the gripping devices at the end of the cables 780 are adjacent the container 112. The trucks 630 are then operated so that the gripping devices each engage a respective corner of the container 112. The truck 630 is then operated so that the lifting device winds in the cable 780. Thus, with all four trucks 630 working together, the container 112 is lifted from the stack.

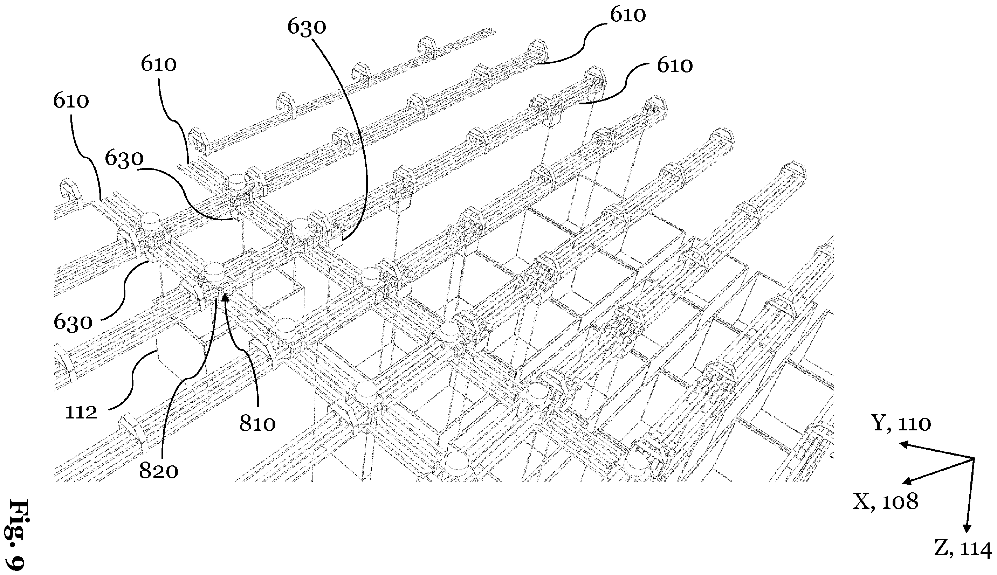

The four trucks 630 are then operated to drive along the track 610 in the X direction, carrying the lifted container 112 with them as they go. This continues until the trucks are each positioned at the intersection of the track 610 on which they are running in the X direction with one of the tracks 610 that extends in the Y direction. The trucks 610 stop so that each is at an intersection of a track 610 extending in the X direction and a track 610 extending in the Y direction. This positioning is shown in Fig. 9.

With continued reference to Fig. 9, as can be seen, in these positions, the trucks 630 (only three of which are visible in Fig. 9) are each positioned on a rotatable track portion 820 of a track rotating device 810.

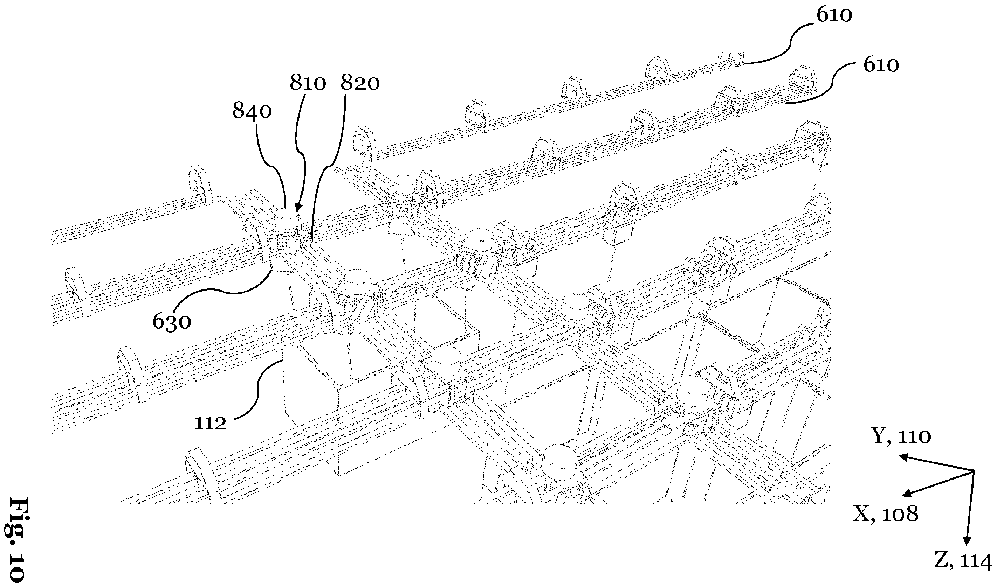

With reference to Fig. 10, the four track rotating devices 810 are then operated to cause the rotating devices 840 of each to rotate the rotatable track portions 820. Fig. 10 shows the rotatable track portions 820 rotated counter-clockwise by about 45 degrees. As the trucks 630 are stationed on the rotatable track portions 820, the trucks 630 rotate with those track portions 820.

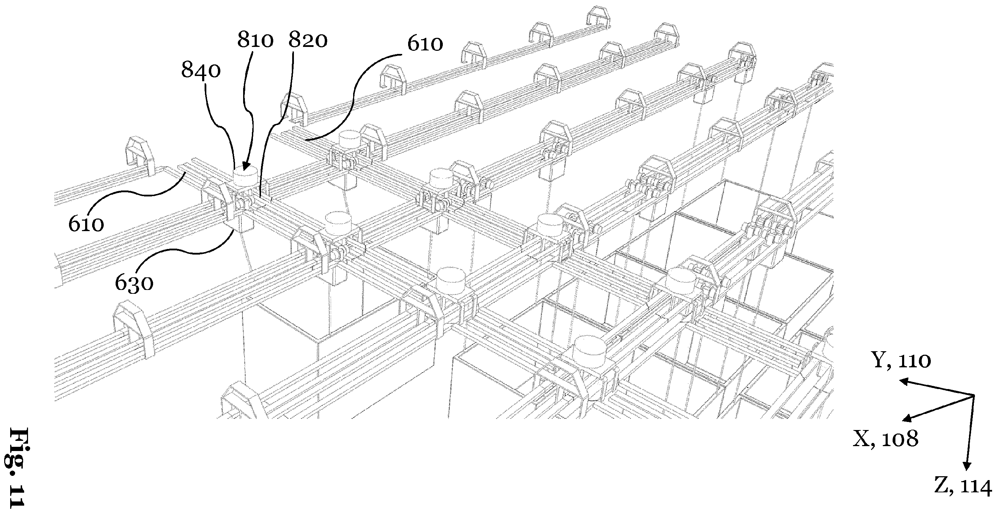

This continues until the rotatable track portions 820 have been rotated into alignment with the tracks 610 extending in the Y direction. In this embodiment, that is a rotation of 90 degrees counter-clockwise. Rotation of the rotatable track portions 820, and the trucks 630 stationed on them, is then stopped. This is the arrangement shown in Fig. 11. With continued reference to Fig. 11, when the rotatable track portions 820 have been rotated into alignment with the tracks 610 extending in the Y direction, the four trucks 630 are then controlled to drive along those tracks 610 in the Y direction to a position in which the container 112 carried by the four trucks 630 is above the stack on to which it is to be placed. Each of the four trucks 630 is then controlled to operate the lifting devices to unwind and so lower the cables 780. This is done in unison so that the container 112 is lowered in a stable way. This continues until the container 112 is placed on top of the desired stack. The four trucks are then controlled to disengage the gripping devices. Thus, the container has been placed in its new position.

### Additional disclosure

The following is also disclosed.

In a first aspect of this invention, there is provided an automated storage and retrieval system, the system comprising:
a plurality of containers arranged in stacks, the containers for the storage of goods, the stacks arranged side by side;
a network of tracks extending above the stacks;
a plurality of robotic container handling vehicles arranged to travel on the tracks, between locations above the stacks;
wherein the plurality of vehicles are arranged to cooperatively engage an uppermost container of one of the stacks to collectively lift that container for moving to another location.

The plurality of vehicles may also be arranged to collectively lower the container at the other location to become the uppermost one of another of the stacks.

### More about the tracks

The network of tracks may be suspended above the stacks of containers. The network of tracks may be suspended other than by structure projecting from the floor dedicated to that purpose. The network of tracks may be suspended from a ceiling of a building containing the automated storage and retrieval system. The network of tracks may be suspended from walls of a building containing the automated storage and retrieval system. By suspending the network of tracks in this way, the need for the grid of existing automated storage and retrieval systems is avoided, thus avoiding the component parts of such a grid, for example the extruded aluminium frame members, and the associated and significant cost of those components.

The network of tracks may extend in sideways directions above the stacks of containers. The network of tracks may extend in two directions, perpendicular to each other. The network of tracks may extend in the X and Y directions. The tracks of the network of tracks may extend along and above each side of the containers in each stack. Thus, there may be a pair of parallel and adjacent tracks running between each adjacent stack of containers.

Each track may comprise a pair of parallel, spaced-apart rails. The pair of rails may, between them, carry the vehicle. Each vehicle may comprise a plurality of wheels that run along the tracks, supporting the vehicle relative thereto as the vehicle travels. At least one of the wheels of each vehicle may run on one of the rails of each track and at least one of the wheels may run on the other of the rails.

The network of tracks may comprise track rotating devices at locations where tracks extending in one of the two directions meet tracks extending in the other direction. Each track rotating device may comprise a rotatable track portion. Each rotatable track portion may be arranged to receive a respective one of the vehicles and rotate that vehicle from a position in which it is orientated and aligned for travelling along a track running in one of the directions to a position in which it is orientated for travelling along a track in the other direction. The rotatable track portions may comprise a length of rotatable track and a device for controllably rotating that length between the two positions. The length of rotatable track may be sized to receive one of the vehicles within that length. The length of rotatable track may comprise a length of each of the two rails of that track.

The rotatable track portions may comprise a length of each of the pair of parallel, adjacent tracks running between adjacent stacks of containers. The track rotating devices may each be operable to rotate the lengths of each of the pair of adjacent tracks between alignment with a first pair of adjacent tracks and alignment with a second pair of adjacent tracks, perpendicular to the first.

The track rotating devices may be operable to rotate the track in response to a signal from a control system of the automated storage and retrieval system. The device for controllably rotating the length of rotatable track may comprise a stepper motor.

The network of tracks may extend such that the rotatable track portions are aligned with and substantially above the corners of each stack of containers.

### More about the vehicles

The vehicles may be arranged to drive on the tracks to move themselves automatically between locations. One, more or all of the wheels of each vehicle may be operable to be driven, thereby moving the vehicle along the tracks. The vehicle may comprise drive means for driving the driven wheel or wheels. The drive means may comprise a battery and a motor, the battery for powering the motor. Each vehicle may have four wheels, two running on each rail of a track. The wheels may have a tread portion that rolls on the rail and a flange portion for ensuring alignment between the wheel and the rail.

Each vehicle may comprise a lifting device arranged to lower from and raise to the vehicle a gripping device of the vehicle. The gripping device may be arranged to releasably engage part of a container so that when the container is so-engaged by a plurality of the vehicles, the container can thereby be lifted from a stack. The gripping device may be arranged to engage a corner of a container; it may be arranged to engaged one end of one side of a container. The vehicles may be arranged such that four vehicles are needed to collectively engage and lift a container.

In another embodiment, at least one vehicle may be connected to at least one other vehicle to tow or push that other vehicle, the at least one vehicle comprising the drive means.

A body of the vehicle may be suspended from its wheels below a track on which it runs. This minimises the space needed above the track and so allows the track to be mounted close to a ceiling. The body of the vehicle may comprise the lifting device. The body of the vehicle may comprise the drive means.

According to a second aspect of this invention there is provided a network of tracks as defined in the first aspect.

According to a third aspect of this invention, there provided a network of tracks, the tracks arranged for conveying robotic container-handling vehicles from one location above one stack of containers to another location above another stack of containers, some of the tracks extending in a first direction and others of the tracks extending in a second direction, wherein the network of tracks comprises track rotating devices at locations where tracks extending in one of the two directions meet tracks extending in the other direction, each track rotating device comprising a rotatable track portion rotatable between alignment with a track extending in the first direction and alignment with a track extending in the second direction.

According to a fourth aspect of this invention, there is provided a robotic container-handling vehicle as defined in the first aspect.

According to a fifth aspect of this invention, there is provided a robotic container-handling vehicle, the vehicle arranged to drive on a network of tracks from one location above one stack of containers to another location above another stack of containers, wherein the vehicle is arranged to cooperate with at least one other vehicle to engage an uppermost container of the one stack to collectively lift that container for moving to the other location.

It is envisaged that optional features of the first aspect are also optional features of second, third, fourth, fifth and sixth aspect; and those features should be considered repeated after each of the second, third, fourth, fifth and sixth aspect. However, for reasons of economy, an actual repetition is avoided.

According to a sixth aspect of this invention, there is provided a method of operating an automated storage and retrieval system, the method comprising:
a plurality of robotic container-handling vehicles travelling along a network of tracks to positions in which each of the plurality of vehicles is above an uppermost container in one stack of containers, and
the vehicles cooperatively engaging the uppermost container to collectively lift that container for moving it to another location.

The method may comprise the vehicles cooperatively lifting the container. The method may comprise the vehicles moving together from above the one stack to positions in which each of the vehicles is above another stack. The method may comprise the vehicles collectively lowering the container to become the uppermost container in the other stack.

The method may comprise operating a plurality of track-rotating devices to change the direction of travel of the vehicles from one of the directions to the other of the directions. The method may comprise operating one track rotating device for each of the vehicles cooperating to lift the container. Each cooperating vehicle may be positioned on a track rotating device when it is operated to change the direction of travel of the vehicle.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system, the system comprising:
a plurality of containers arranged in stacks, the containers for the storage of goods;
a network of tracks extending above the stacks;
a plurality of robotic container handling vehicles arranged to travel on the tracks, between locations above the stacks;
wherein the plurality of vehicles are arranged to cooperatively engage an uppermost container of one of the stacks to collectively lift that container for moving to another location.

2. A network of tracks, the tracks arranged for conveying robotic container-handling vehicles from one location above one stack of containers to another location above another stack of containers, some of the tracks extending in a first direction and others of the tracks extending in a second direction, wherein the network of tracks comprises track rotating devices at locations where tracks extending in one of the two directions meet tracks extending in the other direction, each track rotating device comprising a rotatable track portion rotatable between alignment with a track extending in the first direction and alignment with a track extending in the second direction.

3. A robotic container-handling vehicle, the vehicle arranged to drive on a network of tracks from one location above one stack of containers to another location above another stack of containers, wherein the vehicle is arranged to cooperate with at least one other vehicle to engage an uppermost container of the one stack to collectively lift that container for moving to the other location.

4. A system, a network of tracks or a vehicle according to any preceding claim, wherein the network of tracks is suspended above the stacks of containers from a ceiling or from walls of a building containing the system, network of tracks or the vehicle.

5. A system, a network of tracks or a vehicle according to any preceding claim, wherein each track comprises a pair of parallel, spaced part rails; the pair of rails, between them, arranged to carry the vehicles.

6. A system, a network of tracks or a vehicle according to any preceding claim, wherein the network of tracks extends above the stacks of containers with the tracks extending in two directions, for example perpendicular to each other.

7. A system, a network of tracks or a vehicle according to claim 6, wherein the network of tracks comprises track rotating devices at locations where tracks extending in one of the two directions meet tracks extending in the other direction, each track rotating device comprising a rotatable track portion.

8. A system, a network of tracks or a vehicle according to claim 7, wherein each rotatable track portion is arranged to receive one of the vehicles and rotate that vehicle from a position in which it is orientated and aligned for travelling along a track running in one of the directions to a position in which it is orientated and aligned for travelling along a track in the other direction.

9. A system, a network of tracks or a vehicle according to any preceding claim, wherein the vehicles are arranged to drive on the tracks to move themselves between locations.

10. A system, a network of tracks or a vehicle according to any preceding claim, wherein each vehicle comprises a lifting device arranged to lower from, and raise to, the vehicle a gripping device of the vehicle, the gripping device for releasably engaging part of the uppermost container such that, when the container is so-engaged by the plurality of cooperating vehicles, the vehicles can collectively lift the container.

11. A system, a network of tracks or a vehicle according to any preceding claim wherein each vehicle comprises wheels that run along the tracks, supporting the vehicle relative thereto as the vehicle travels, wherein the vehicle is suspended from its wheels below a track on which it runs.

12. A method of operating an automated storage and retrieval system, the method comprising:
a plurality of robotic container-handling vehicles travelling along a network of tracks to positions in which each of the plurality of vehicles is above an uppermost container of one stack of containers, and
the vehicles cooperatively engaging the uppermost container to collectively lift that container from the stack for moving it to another location.

13. A method according to claim 12 and comprising the vehicles cooperatively lifting the container; and optionally moving together from above the one stack to positions in which each of the vehicles is above another stack; and optionally the vehicles collectively lowering the container to become the uppermost container in the other stack.

14. A method according to claim 12 or claim 13 and comprising operating a plurality of track-rotating devices to change the direction of travel of the vehicles from one of the directions to the other of the directions.

15. A computer-readable medium comprising instructions which, when executed by a processor of a device, cause the device to perform a method according to any of claim 12 to claim 14.
